# EUROPÄISCHE PATENTANMELDUNG

(11) **EP 1 347 144 A2**
(43) Veröffentlichungstag der Anmeldung: **24.09.2003**
(21) Anmeldenummer: 03003726.1
(22) Anmeldetag: 19.02.2003
(51) Int. Cl.: E06B 5/16, E04B 1/94

(54) **Brandschutzelement, insbesondere für Feuerschutztüren**

(30) Priorität: 20.03.2002 DE 10212332
(71) Anmelder: Deutsche Rockwool Mineralwoll GmbH & Co. OHG, 45966 Gladbeck (DE)
(72) Erfinder: Daschkeit, Axel, 59192 Bergkamen (DE)
(74) Vertreter: Wanischeck-Bergmann, Axel, Dipl.-Ing.

(57) **Zusammenfassung**

Die Erfindung betrifft ein Brandschutzelement mit Schichtstruktur, insbesondere für Feuerschutztüren, bestehend aus vorzugsweise zwei äußeren Mineralwolle-, insbesondere Steinwoll-Dämmplatten und zumindest einer mittleren Schicht eines zwischen den äußeren Dämmplatten angeordneten Brandschutzmaterials. Um die Herstellung solcher Brandschutzelemente zu vereinfachen und kostengünstiger zu gestalten, ist vorgesehen, dass die mittlere Schicht (4) in mehrere stabförmige, voneinander getrennte Bereiche (5) unterteilt ist und aus einem pulverförmigen, insbesondere trockenem Gemisch aus überwiegend Gips und Zuschlag, insbesondere aus einem Ansetzbinder besteht, welches unter Zugabe von Wasser aushärtet.

## Beschreibung

Die Erfindung betrifft ein Brandschutzelement mit Schichtstruktur, insbesondere für Feuerschutztüren, bestehend aus vorzugsweise zwei äußeren Mineralwolle-, insbesondere Steinwoll-Dämmplatten und zumindest einer mittleren Schicht eines zwischen den äußeren Dämmplatten angeordneten Brandschutzmaterials.

Als Feuerschutzabschlüsse mit bestimmter Feuerwiderstandsklasse nach DIN 4102 Teil 5 gelten Stahltüren nach DIN 18082, Teil 1 oder Teil 3. Feuerschutzabschlüsse sind beispielsweise selbstschließende Türen, Klappen und Tore, die entsprechend der Definition der Norm dazu bestimmt sind, im eingebauten Zustand den Durchtritt eines Feuers durch Öffnungen in Wänden und Decken zu behindern.

Die Feuerwiderstandsdauer dieser Einbauten bemißt sich nach der Zeit, in der diese den Durchtritt des Feuers verhindern. Die Feuerwiderstandsdauer wird gemäß DIN 4102-4 geprüft. Es wird als wesentliches Prüfkriterium die Zeitdauer gemessen, bis zu der die Oberflächentemperatur der feuerabgewandte Seite eines Türelements beispielsweise < 180°C bleibt.

Es werden die Feuerwiderstandsklassen T 30, T 60, T 90, T 120 und T 180 unterschieden. Die Zahl entspricht der Feuerwiderstanddauer in Minuten. Feuerschutzabschlüsse nach DIN 18082, nachfolgend generell nur noch als Feuerschutztüren bezeichnet, bestehen aus Blechkonstruktionen, in die sogenannte Brandschutzelemente eingelegt werden. Das Zusammenfügen der Feuerschutztüren erfolgt innerhalb kürzester Zeit auf leistungsfähigen Produktionslinien, so dass die Brandschutzelemente für die Handhabung bei der Herstellung der Türen ein möglichst geringes Gewicht aufweisen sollen. Gleichzeitig können die Halteelemente der Türen sowie die Zargen geringer dimensioniert werden. Das Brandschutzelement muß eine für die übliche Nutzung, insbesondere gegen Erschütterungen ausreichende innere Steifigkeit aufweisen. Um die Feuerwiderstandsfähigkeit zu erreichen, muß das Brandschutzelement auch im Brandfall formstabil bleiben und eine geringe Wärmeleitfähigkeit bei hohen Temperaturen aufweisen.

Bei Türen mit geringer Feuerwiderstandsdauer haben sich Brandschutzelemente aus Mineralwolle-, insbesondere Steinwolle-Dämmplatten bewährt. Diese Mineralwolle-, insbesondere Steinwolle-Dämmplatten weisen eine Rohdichte von über 100 kg/m³ auf und sind zumeist mit geringen Mengen eines duroplastisch aushärtenden Phenol-Formaldehyd-Harnstoffharzes gebunden. Da die organischen Bestandteile naturgemäß zu einem Energietransfer auf die dem Feuer abgewandte Seite beitragen, muß ihr Anteil in dem Brandschutzelement möglichst gering sein.

Steinwolle-Dämmplatten, die beispielsweise mit nanoskaliger Kieselsäure nach dem Sol-Gel-Verfahren gebunden sind, weisen diese Nachteile nicht auf.

Da die Blechummantelungen der Türen aus Gründen des Korrosionsschutzes mit einem Farbanstrich versehen sind, der seinerseits ebenfalls zu dem unerwünschten Energietransfer beiträgt, sollte das Brandschutzelement energieabsorbierende und damit temperatursenkende Stoffe enthalten. Häufig werden hierzu Hydratverbindungen verwendet, bei denen erhebliche Mengen an Wärmeenergie erforderlich sind, um diese Stoffe auf die Dehydratisierungstemperaturen zu erwärmen, die chemische Bindung aufzuheben und das Wasser zu verdampfen. Ergänzend zu Hydratverbindungen sind hierfür beispielsweise auch Karbonate oder hydrosilikatische Verbindungen geeignet.

Derartige Verbindungen können allein oder in Gemischen in der Fasermasse der Dämmstoffplatten gleichmäßig verteilt werden. Die Wirksamkeit kann auch durch die Konzentration der Zuschläge oder eines Teils derselben in den mittleren Zonen des Brandschutzelements beeinflußt werden.

Es ist üblich, beispielsweise Aluminiumhydroxid, Magnesiumhydroxid oder andere Substanzen etwa im Verhältnis 1:1, also in erheblichen Mengen in die Fasermasse einzubringen.

In der DE 38 24 598 A1 wird eine Einlage für eine feuerhemmende Tür beschrieben, die aus zwei Schichten Mineralwolle besteht, die mittig durch eine Schicht aus einem Gemisch eines wasserabspaltenden Hydroxids und einem Wasserglas oder Kieselsol verbunden sind.

In der DE 295 07 498 U1 werden die insbesondere verfahrenstechnischen Nachteile bei der Herstellung solcher Brandschutzelemente herausgestellt. Die Verbesserung nach der DE 295 07 498 U1 besteht darin, das naturgemäß nasse Gemisch nicht mehr auf die Oberflächen der Mineralwolle-Dämmplatten direkt aufzutragen und jeweils zwei Platten zu einem Brandschutzelement zusammenzukleben, sondern in der Herstellung einer separaten Platte als Halbzeug. Diese Platte besteht aus vorzugsweise 50 bis 90 Masse-% Aluminiumhydroxid und 10 bis 50 Masse-% Wasserglas und ist auf beiden großen Flächen mit einem Glasgewebe bedeckt, wobei je nach Ausführungsform auch Kieselsol oder Magnesiabinder verwendet werden. Die Dicke dieser separaten Platte beträgt vorzugsweise 4 bis 5 mm, bei Seitenlängen der Platten von beispielsweise 50 bis 100 cm x 150 bis 200 cm.

Der Erfindung liegt die Aufgabe zugrunde, die Herstellung solcher Brandschutzelemente zu vereinfachen und kostengünstiger zu gestalten.

Als Lösung dieser Aufgabenstellung wird gemäß der Erfindung bei einem Brandschutzelement nach dem Oberbegriff des Anspruches 1 vorgesehen, dass die mittlere Schicht in mehrere stabförmige, voneinander getrennte Bereiche unterteilt ist und aus einem pulverförmigen, insbesondere trockenem Gemisch aus überwiegend Gips und Zuschlag, insbesondere aus einem Ansetzbinder besteht, welches unter Zugabe von Wasser aushärtet.

Das Brandschutzelement besteht somit aus zwei Dämmplatten, vorzugsweise aus Steinwolle und einer in einzelne Bereiche unterteilte Schicht, beispielsweise eines Ansetzbinders. Vorteil dieses Brandschutzelementes ist es, dass über die Größe und die Anzahl der Bereiche die benötigte Menge des Brandschutzmaterials sehr genau eingestellt werden kann, wobei die Wärme- und/oder Schalldämmung des Brandschutzmaterials ebenfalls dadurch optimiert wird, dass ein Brandschutzelement bei auf den Anwendungsfall abgestimmtem Brandschutzmaterial mit maximal möglichem Dämmmaterialanteil bereitgestellt wird, so dass die bei vollflächigen Schichten aus Brandschutzmaterial mitunter schlechten Dämmeigenschaften verbessert werden können. Darüber hinaus ist das erfindungsgemäße Brandschutzelement trotz des steifen Brandschutzmaterials zumindest begrenzt biegefähig.

Vorzugsweise erstrecken sich die Bereiche mit Brandschutzmaterial über die gesamte Länge der Dämmplatten, um in jedem Abschnitt des Brandschutzelementes einen optimalen Feuerwiderstandswert zu erzielen. Durch diese Ausgestaltung können die Bereiche mit dem Brandschutzmaterial relativ schmal ausgebildet werden, was die Biegefähigkeit des Brandschutzelementes wesentlich verbessert.

Nach einem weiteren Merkmal der Erfindung ist vorgesehen, dass die Bereiche im Querschnitt symmetrisch, insbesondere achsen- oder rotationssymmetrisch ausgebildet sind. Insbesondere haben sich quadratische Querschnitte der Bereiche als vorteilhaft erwiesen, da entsprechende Ausnehmungen in einfacher Weise in die Dämmplatte eingefräst und/oder eingesägt werden können und die Befüllung der Ausnehmungen bei derartigen Querschnitt vereinfacht ist, ohne dass die Gefahr besteht, dass bei einer automatisierten Befüllung Bereiche unbefüllt bleiben, wie es beispielsweise bei hinterschnittenen Ausnehmungen der Fall sein kann.

Die Bereiche sind vorzugsweise in gleichmäßigem Abstand zueinander angeordnet, wobei der Abstand zwischen benachbarten Bereichen im wesentlichen der Breite oder dem Durchmesser eines Bereichs entspricht. Es ergibt sich hierdurch eine gleichmäßige Verteilung des Brandschutzmaterials, ohne dass die voranstehend beschriebenen Vorteile des Brandschutzelementes negativ beeinflusst werden.

Vorzugsweise weist eine Dämmplatte des Brandschutzelementes Nuten auf, die der Aufnahme des Gemisches dienen. Die zweite Dämmplatte hat zwei ebene große Oberflächen, von denen eine zur Abdeckung der mit dem Gemisch befüllten Nuten auf die erste Dämmplatte aufgelegt und mit dieser verbunden ist. Die Verbindung der beiden Dämmplatten erfolgt hierbei insbesondere über das Gemisch. Demzufolge wird die zweite Dämmplatte insbesondere unmittelbar nach Einfüllen des Gemisches in die Nuten aufgelegt, so dass die zweite Dämmplatte über das abgebundene Gemisch mit der ersten Dämmplatte verbunden ist.

Die mittlere Schicht mit den voneinander getrennten Bereichen ist insbesondere im Bereich der Mittelebene des Brandschutzelementes angeordnet, so dass die mittlere Schicht in gleichen Abständen zu den großen Oberflächen verläuft.

Das Gemisch kann schließlich mit Hydroxyden gefüllt sein, um seine Kühlwirkung im Brandfall zu verstärken. Ein derart ausgebildetes Brandschutzelement kann vorzugsweise als vollständige oder geteilte Einlage in eine Tür eingelegt werden.

Die Mineralwolle-, insbesondere Steinwolle-Dämmplatten weisen Rohdichten ≥ ca. 120 kg/m³ bis ca. 200 kg/m³, vorzugsweise ca. 150-170 kg/m³ auf. Der Gehalt an organischen Bestandteilen beträgt weniger als ca. 3 Masse-%.

Durch die erfindungsgemäße Ausgestaltung der Brandschutzelemente kann im übrigen auch eine baustellenseitige Verarbeitung vorgesehen sein, so dass lange Lagerzeiten in der Produktionsstätte zur Aushärtung des Gemisches vermieden werden können. Das erfindungsgemäße Brandschutzelement kann demzufolge dem Verarbeiter, insbesondere dem Hersteller von Feuerschutztüren in seinen Komponenten zur Verfügung gestellt werden.

Ein bevorzugtes Ausführungsbeispiel der Erfindung ist in der Zeichnung schematisch dargestellt. Es zeigen
Fig. 1 einen Ausschnitt eines Brandschutzelementes mit Schichtstruktur in perspektivischer Ansicht und
Fig. 2 eine Ansicht in Richtung des Pfeiles II von Fig. 1.

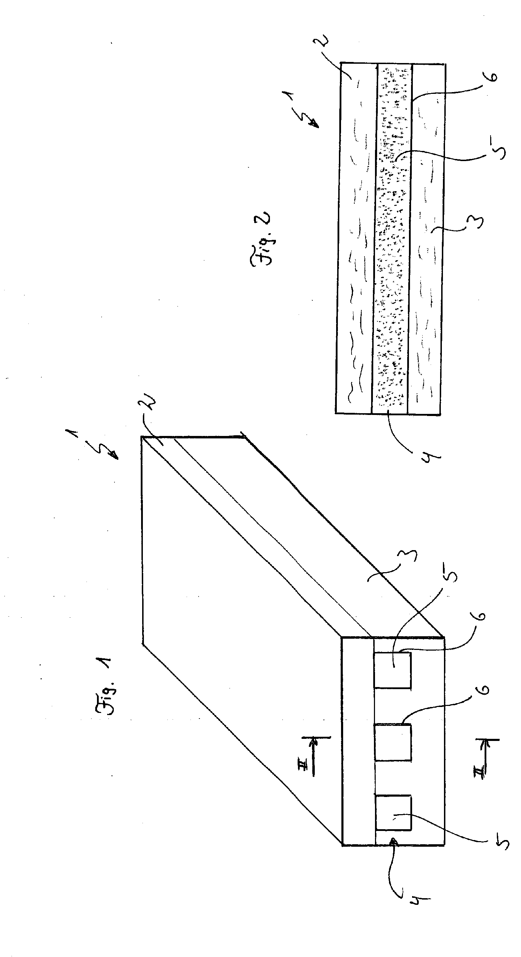

Das Brandschutzelement 1 von Fig. 1 und 2 ist insbesondere für Feuerschutztüren bestimmt und besteht aus vorzugsweise zwei äußeren Steinwolle-Dämmplatten 2, 3 und zumindest einer mittleren Schicht 4 aus anorganischem Werkstoff.

Die mittlere Schicht 4 besteht aus stabförmigen Bereichen 5, die im Querschnitt quadratisch und aus modifiziertem Ansetzbinder mit einem Hydroxyd ausgebildet sind. Die Dämmplatte 3 hat im Vergleich zur Dämmplatte 2 eine doppelte Höhe und weist in ihrer der Dämmplatte 2 zugewandten großen Oberfläche im Querschnitt quadratische Nuten 6 auf, die in die Oberfläche eingefräst sind. Diese Nuten 6 sind mit dem Ansetzbinder ausgefüllt und mit der Dämmplatte 2 abgedeckt, wobei der Ansetzbinder die Dämmplatte 2 mit der Dämmplatte 3 verklebt.

Die Bereiche 5 sind in gleichmäßigen Abständen in der Mittelebene des Brandschutzelementes 1 angeordnet, wobei der Abstand von zwei benachbarten Bereichen 5 der Breite eines Bereichs 5 entspricht.

Die Dämmplatten 2 und 3 haben eine Mindest-Rohdichte von etwa 80 kg/m³ und eine Dicke von etwa 4 bis 15 mm. Die Dicke kann auch etwa 4 bis 8 mm betragen, soweit die Feuerschutzbestimmungen dies zulassen.

Je nach den in Frage kommenden Feuerschutzklassen können die Steinwolle-Dämmplatten Rohdichten ≥ ca. 120 kg/m³ bis ca. 200 kg/m³ aufweisen, wobei eine Rohdichte von etwa 150 bis 170 kg/m³ sich in zahlreichen Anwendungsfällen als vorteilhaft erwiesen hat.

Die derart ausgebildeten Brandschutzelementen werden einmal in symmetrischer Anordnung in die Blechkonstruktion einer Feuerschutztür aus Metall eingelegt. Die Abmessungen des Brandschutzelements 1 entsprechen den InnenAbmessungen des Feuerschutzelements. Die Montage kann hierbei wie folgt durchgeführt werden:
- Einlegen der Dämmplatte 3 in den Rahmen des Feuerschutztürblattes;
- Befüllen der Ausnehmungen bzw. Nuten 6 mit dem Ansetzbinder;
- Auflegen der Dämmplatte 2 auf die Dämmplatte 3 bei nicht ausgehärtetem Ansetzbinder;
- Aushärten des Ansetzbinders und
- Verschließen des Feuerschutztürblattes mit einer Metallplatte.

Selbstverständlich kann das erfindungsgemäße Brandschutzelement auch herstellerseitig fertiggestellt sein.

Das erfindungsgemäß ausgebildete Brandschutzelement weist somit statt einer vollflächig kühlenden Schicht einzelne Segmente auf, die mit kühlendem Material ausgefüllt sind. Durch die ungleiche Verteilung der Massen in einer damit ausgefüllten Feuerschutztür ändert sich auch das Schwingungsverhalten einer derartigen Feuerschutztür, so dass sich insgesamt ein besserer Schallschutz ergibt. Darüber hinaus weist das erfindungsgemäße Brandschutzelement ein geringeres Gewicht bei schlanken Abmessungen auf. Dieser Vorteil ist besonders bei Feuerschutztüren aus Stahl oder einer Metalldeckenkonstruktion von Vorteil.

Durch die Form der Bereiche 5 kann das Brandverhalten einer mit einem derartigen Brandschutzelement ausgebildeten Feuerschutztür exakt auf bestimmte Anforderungen eingestellt werden. So kann beispielsweise durch die Größe der Bereiche die Menge an kühlendem Wasser gesteuert werden, die im Brandfall austritt. Die Form der Bereiche kann zusätzlich den Zeitraum beeinflussen, über den das kühlende Wasser abgegeben wird. Darüber hinaus besteht die Möglichkeit, die Bereiche an besonders gefährdeten Stellen einer Feuerschutztür zu konzentrieren, um dort ein besseres Brandschutzverhalten zu erzielen.

Das in die Bereiche eingebrachte Brandschutzmaterial kann aus zugeschnittenen Platten bestehen oder in pastöser Form eingebracht werden, so dass es gleichzeitig der Verklebung der beiden äußeren Dämmplatten dient.

### Liste der Bezugszeichen

- 1: Brandschutzelement
- 2: Steinwolle-Dämmplatte
- 3: Steinwolle-Dämmplatte
- 4: Mittlere Schicht
- 5: Bereich
- 6: Nut

## Patentansprüche

1. Brandschutzelement mit Schichtstruktur, insbesondere für Feuerschutztüren, bestehend aus vorzugsweise zwei äußeren Mineralwoll-, insbesondere Steinwolle-Dämmplatten und zumindest einer mittleren Schicht eines zwischen den äußeren Dämmplatten angeordneten, insbesondere wasserabspaltendem Brandschutzmaterials,
**dadurch gekennzeichnet,**
**dass** die mittlere Schicht (4) in mehrere stabförmige, voneinander getrennte Bereiche (5) unterteilt ist und aus einem pulverförmigen, insbesondere trockenem Gemisch aus überwiegend Gips und Zuschlag, insbesondere aus einem Ansetzbinder besteht, welches unter Zugabe von Wasser aushärtet.

2. Brandschutzelement nach Anspruch 1,
**dadurch gekennzeichnet,**
**dass** sich die Bereiche (5) über die gesamte Länge der Dämmplatten (2, 3) erstrecken.

3. Brandschutzelement nach Anspruch 1 oder 2,
**dadurch gekennzeichnet,**
**dass** die Bereiche (5) im Querschnitt symmetrisch, insbesondere rotationssymmetrisch ausgebildet sind.

4. Brandschutzelement nach Anspruch 3,
**dadurch gekennzeichnet,**
**dass** die Bereiche (5) im Querschnitt quadratisch ausgebildet sind.

5. Brandschutzelement nach Anspruch 1,
**dadurch gekennzeichnet,**
**dass** die Bereiche (5) in gleichmäßigem Abstand zueinander angeordnet sind, wobei der Abstand zwischen benachbarten Bereichen (5) im wesentlichen der Breite oder dem Durchmesser eines Bereichs (5) entspricht.

6. Brandschutzelement nach Anspruch 1,
**dadurch gekennzeichnet,**
**dass** eine erste Dämmplatte (3) Nuten (6) aufweist, die der Aufnahme des Gemisches dienen und dass die zweite Dämmplatte (2) zwei ebene große Oberflächen aufweist, von denen eine zur Abdeckung der Nuten (6) auf die erste Dämmplatte (3) aufgelegt und mit dieser verbunden ist..

7. Brandschutzelement nach Anspruch 6,
**dadurch gekennzeichnet,**
**dass** die beiden Dämmplatten (2, 3) über das Gemisch miteinander verklebt sind.

8. Brandschutzelement nach Anspruch 1,
**dadurch gekennzeichnet,**
**dass** das Gemisch Hydroxyde, insbesondere Aluminium- oder Magnesiumhydroxyd aufweist.

9. Brandschutzelement nach Anspruch 1,
**dadurch gekennzeichnet,**
**dass** die mit dem Gemisch gefüllten Bereiche (5) im wesentlichen in Längsrichtung und/oder quer zur Längsrichtung der Dämmplatten (2, 3) ausgerichtet sind.
